(19) **Europäisches Patentamt / European Patent Office / Office européen des brevets**

(11) **EP 4 783 725 A1**

(12) **EUROPEAN PATENT APPLICATION**
published in accordance with Art. 153(4) EPC

(43) Date of publication:
**29.07.2026 Bulletin 2026/31**

(21) Application number: **24957440.1**

(22) Date of filing: **28.11.2024**

(51) International Patent Classification (IPC):
*H04W 76/19* (2018.01)    *H04W 76/18* (2018.01)
*H04W 48/20* (2009.01)    *H04W 24/10* (2009.01)
*H04W 74/0808* (2024.01)    *H04W 24/08* (2009.01)
*H04W 84/06* (2009.01)

(52) Cooperative Patent Classification (CPC):
**H04W 24/08; H04W 24/10; H04W 36/00;
H04W 36/08; H04W 48/20; H04W 74/0808;
H04W 74/0833; H04W 76/18; H04W 76/19;
H04W 84/06**

(86) International application number:
**PCT/KR2024/019109**

(87) International publication number:
**WO 2026/100809 (15.05.2026 Gazette 2026/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.11.2024 KR 20240157537**

(71) Applicant: **Ajou University Industry-Academic
Cooperation
Foundation
Suwon-si, Gyeonggi-do 16499 (KR)**

(72) Inventors:
• **KIM, Jae Hyun**
  **Seoul 06602 (KR)**
• **KIM, Tae Youn**
  **Suwon-si, Gyeonggi-do 16237 (KR)**
• **LEE, Won Jae**
  **Suwon-si, Gyeonggi-do 16497 (KR)**
• **LEE, Jae Yeol**
  **Suwon-si, Gyeonggi-do 16517 (KR)**
• **LEE, Jong Tae**
  **Suwon-si, Gyeonggi-do 16497 (KR)**

(74) Representative: **Winter, Brandl - Partnerschaft
mbB
Alois-Steinecker-Straße 22
85354 Freising (DE)**

(54) **APPARATUS AND METHOD FOR PERFORMING CONNECTION RE-ESTABLISHMENT IN WIRELESS COMMUNICATION SYSTEM**

(57) The present disclosure relates to a method for operating a terminal in a communication system, and the method includes receiving measurement control, measuring a signal to transmit a measurement report message to a serving cell, and performing cell reselection to a terrestrial cell other than the serving cell upon detecting radio link failure, when the serving cell is a non-terrestrial network (NTN) cell and a condition for omitting radio resource control (RRC) connection re-establishment (RRE) is satisfied.

EP 4 783 725 A1

**(Cont. next page)**

[FIG. 5]

EP 4 783 725 A1

510 TERMINAL
520-1 FIRST BASE STATION
520-2 SECOND BASE STATION
530 MME

S501 — CONFIGURE AREA RESTRICTION

CONTROL MEASUREMENT(S503)

MEASURE SIGNAL — S505

REPORT MEASUREMENT(S507)

DETERMINE HANDOVER — S509

REQUEST HANDOVER(S511)

S513 — CONTROL ADMISSION

ACKNOWLEDGE HANDOVER REQUEST(S515)

PERFORM RACH(S517)

DETECT RADIO LINK FAILURE — S519

DETERMINE CELL RESELECTION CONDITION — S521

PERFORM CELL RESELECTION OR RRC CONNECTION REESTABLISHMENT BASED ON WHETHER CELL RESELECTION CONDITION IS SATISFIED — S523

## Description

## Technical Field

The present disclosure relates to a wireless communication system, and particularly, to an apparatus and method for performing connection re-establishment in a wireless communication system.

## Background Art

With the development of mobile communication services, non-terrestrial networks (NTN) without spatial constraints are attracting attention, and in particular, low earth orbit (LEO) satellites are expected to play a major role. Accordingly, the 3rd Generation Partnership Project (3GPP) is proceeding with standardization for the non-terrestrial networks without spatial constraints to provide effective communication services.

This research is a research conducted with the support of the Science and Technology Commercialization Promotion Agency with the financial resource of the Ministry of Science and ICT in 2024 (RS-2024-00423453, Intellectual property (IP) advancement and commercialization for promoting commercialization of next-generation low earth orbit (LEO) constellation satellite utilization technology).

This research is a research conducted with the support of the Institute of Information & Communications Technology Planning & Evaluation (IITP) with the financial resource of the government (Ministry of Science and ICT) in 2024 (No. RS-2021-II210794, Development of 3-dimensional spatial mobile communication technology), (No. RS-2022-II220704, Development of 3D-NET core technology for supporting high-speed moving objects).

## Disclosure

## Technical Problem

The present disclosure is directed to providing an apparatus and method for effectively performing connection re-establishment in a wireless communication system.

The present disclosure is directed to providing an apparatus and method for performing conditional radio resource control (RRC) connection re-establishment in a wireless communication system.

The present disclosure is directed to providing an apparatus and method for performing cell reselection depending on whether a RRC connection re-establishment condition is satisfied or performing RRC connection re-establishment to a serving cell.

The present disclosure is directed to providing an apparatus and method for enhancing handover performance of a non-terrestrial network (NTN) environment in a wireless communication system.

The present disclosure is directed to providing an apparatus and method for applying conditional RRC connection re-establishment to an NTN in a wireless communication system.

## Technical Solution

According to an aspect of the present disclosure, a method of operating a terminal in a system is disclosed. The method may include receiving measurement control, measuring a signal to transmit a measurement report message to a serving cell, and performing cell reselection to a terrestrial cell other than the serving cell upon detecting radio link failure, when the serving cell is a non-terrestrial network (NTN) cell and a condition for omitting radio resource control (RRC) connection re-establishment (RRE) is satisfied.

According to another aspect of the present disclosure, a terminal in a system is disclosed. The terminal may include a transceiver and a processor coupled to the transceiver, and the processor may be configured to: receive measurement control; measure a signal to transmit a measurement report message to a serving cell; and perform cell reselection to a terrestrial cell other than the serving cell upon detecting radio link failure, when the serving cell is a non-terrestrial network (NTN) cell and a condition for omitting radio resource control (RRC) connection re-establishment (RRE) is satisfied.

## Advantageous Effects

According to embodiments of the present disclosure, RRC connection re-establishment for terminals using an NTN can be effectively performed.

## Description of Drawings

FIG. 1 illustrates an example of a network according to an embodiment of the present disclosure.
FIG. 2 illustrates another example of a network according to an embodiment of the present disclosure.
FIG. 3 illustrates a configuration of a device in a wireless communication system according to an embodiment of the present disclosure.
FIG. 4 illustrates an example of a procedure for omitting a conditional radio resource control (RRC) connection re-establishment (RRE) in a wireless communication system according to an embodiment of the present disclosure.
FIG. 5 illustrates an example of a conditional RRC connection re-establishment procedure according to determination of a cell reselection condition in a wireless communication system according to an embodiment of the present disclosure.
FIG. 6 illustrates an example of a procedure of performing cell reselection upon detecting radio link failure (RLE) during a handover according to an embodiment of the present disclosure.

FIG. 7 illustrates an example of a procedure of operating a terminal in a wireless communication system according to an embodiment of the present disclosure.

FIG. 8 illustrates an example of a procedure of identifying a priority of a cell to determine a cell reselection condition according to an embodiment of the present disclosure.

FIG. 9 illustrates an example of a procedure of identifying the strength of a signal to determine a cell reselection condition according to an embodiment of the present disclosure.

FIG. 10 illustrates an example of a procedure of identifying an available connection time to determine a cell reselection condition according to an embodiment of the present disclosure.

## Mode for Invention

For terminology in the present embodiments, common terms, which are widely used now, have been selected in consideration of functions in the embodiments but are subject to alterations according to intentions of those skilled in the art, precedents, or the emergence of new technology. Furthermore, a particular case may have some terms that are randomly selected by an applicant, and those terms will be clarified in detail in corresponding parts. Accordingly, the terms used in the present embodiments should not be interpreted as merely the names of the terms, but should be defined based on the meanings they convey and the overall context of the present embodiments.

As the present disclosure may be subject to various modifications and have various forms, specific embodiments will be described in detail with reference to the accompanying drawings. However, the present embodiments are not limited to a specific disclosure form but are to be understood to include all the modifications, equivalents, and alternatives within the scope and idea thereof. The terms as used in the present specification are provided to merely describe the present embodiments, not intended to limit the embodiments.

Unless otherwise defined, all terms used herein have the same meaning as commonly understood by those skilled in the art to which the present embodiments pertains. The terms as generally defined in dictionaries may be interpreted as having the same or similar meanings as or to contextual meanings of related technology. Unless otherwise defined, the terms should not be interpreted as ideally or excessively formal meanings.

The present disclosure relates to a technology for a handover for a terminal using a non-terrestrial networks (NTNs). Alternatively, the present disclosure relates to a technique of cell reselection for a terminal that uses an NTN. In a conditional handover (CHO) or dual active protocol stack (DAPS) handover procedure, when radio link failure (RLF) of a source cell occurs, a terminal should perform a RRE procedure with the source cell in a general situation other than a situation in which information on a target is known. However, in the CHO or DAPS procedure, even when RLF occurs and RRE is performed, the handover may be performed again because of a characteristic of an NTN environment. Frequent handovers may cause waste of resources or interference, thereby degrading communication performance. Consequently, a procedure associated with cell reselection may be additionally required as a procedure associated with RRE in an NTN environment. Thus, the present disclosure proposes a procedure for applying a conditional RRE to an NTN.

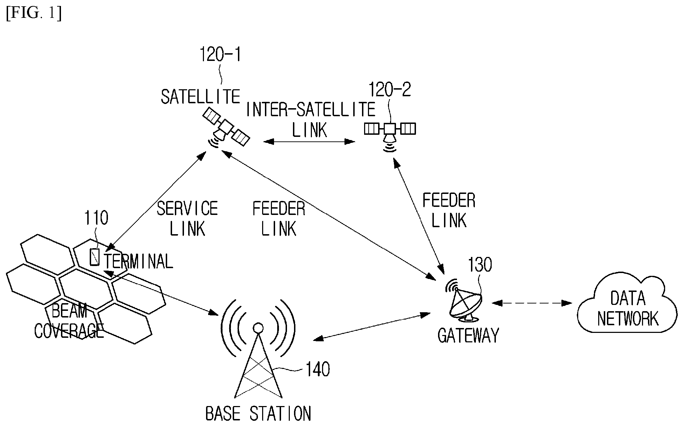

FIG. 1 illustrates an example of a network according to an embodiment of the present disclosure.

Referring to FIG. 1, the network may include an NTN and a TN and include a terminal 110, satellites 120-1 and 120-2, a gateway 130, and a base station. The terminal 110 is a user device equipped with hardware and software that receive cellular data from the satellite 120-1, and may be a mobile device or a stationary device. For example, the terminal 110 may include a mobile phone, a smart phone, a wearable device, and a user equipment (UE). In addition, the terminal 110 is not limited to the above-described examples but may include all electronic devices capable of cellular communication such as a laptop computer and a tablet PC. The terminal 110 is not limited to the above-described examples. In FIG. 1, the network is illustrated to include a single terminal 110, which is merely an example embodiment to which the present disclosure is not limited, and may certainly include a plurality of terminals 110.

Specifically, the terminal 110 may support a communication protocol specified by the 3rd generation partnership project (3GPP) standards (e.g., the LTE communication protocol, the LTE-A communication protocol, or the NR communication protocol). A plurality of communication nodes 110 to 130 may support a code division multiple access (CDMA) technology, a wideband CDMA (WCDMA) technology, a time division multiple access (TDMA) technology, a frequency division multiple access (FDMA) technology, an orthogonal frequency division multiplexing (OFDM) technology, a filtered OFDM technology, a cyclic prefix (CP)-OFDM technology, a discrete Fourier transform-spread-OFDM (DFT-s-OFDM) technology, an orthogonal frequency division multiple access (OFDMA) technology, a single carrier (SC)-FDMA technology, a non-orthogonal multiple access (NOMA) technology, a generalized frequency division multiplexing (GFDM) technology, a filter bank multi-carrier (FBMC) technology, a universal filtered multi-carrier (UFMC) technology, a space division multiple access (SDMA) technology, and the like.

The satellites 120-1 and 120-2 fly along a predetermined orbit and may provide a cell with a certain coverage area by forming a beam toward the ground. In the present disclosure, the satellite 120-1 may be a serving satellite, and the satellite 120-2 may be a target satellite. In addition, the serving satellite and the target satellite may be referred to as a serving cell and a target cell, respectively, and may be used interchangeably. In addition, in the present disclosure, the satellites 120-1 and 120-2 may be collectively referred to as non-terrestrial cells. The gateway 130 provides the satellites 120-1 and 120-2 with a link for accessing the network. A base station 140 may be a terrestrial base station or a wireless communication device fixed in a specific place and provide a cell having a predetermined size of coverage. In the present disclosure, the satellites 120-1 and 120-2 and the base station 140 may be referred to as gNodeBs (gNBs) or cells. In addition, in the present disclosure, a last cell that the terminal was previously connected to may be mentioned, and the last cell may be referred to as a last gNB, a last serving gNB, or a source cell. As an example, the last cell may be a previously connected serving cell preceding connection to a new cell that results from the occurrence of a handover.

A link between the terminal 110 and the satellite 120-1 is referred to as a service link and may be based on the NR specifications defined in 3GPP. Links between the satellites 120-1 and 120-2 and the gateway 130 are referred to as feeder links and may be based on 3GPP or a radio interface other than 3GPP. An inter-satellite link (ISL) may be used mainly for regenerative satellites.

In the case of a transparent satellite based on an NR-RAN architecture, NR-Uu may be a satellite radio interface for a feeder link and a service link. In the case of a transparent satellite, the satellite performs radio frequency filtering, frequency conversion, and amplification functions. In the case of a regenerative satellite, an on-board function is implemented in the satellite, thereby enabling the satellite to perform not only radio frequency filtering, frequency conversion, and amplification but also some or all base station functions such as switching, routing, coding, modulation, decoding, and demodulation.

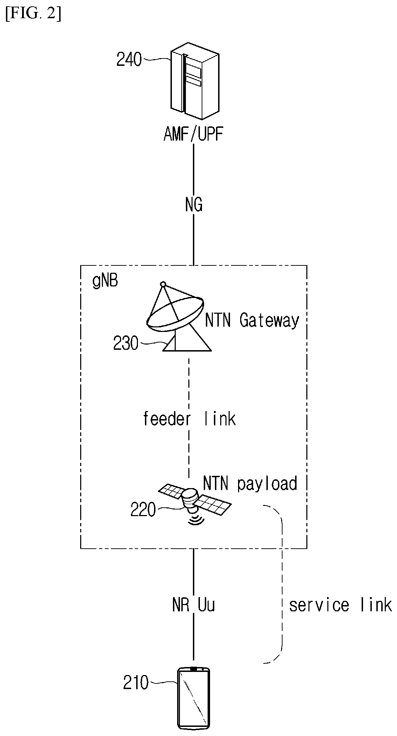

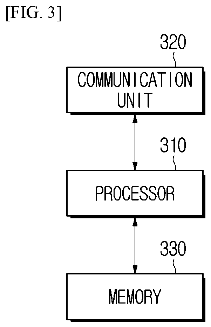

FIG. 2 illustrates another example of a network according to an embodiment of the present disclosure. FIG. 3 illustrates an example of an NTN that provides non-terrestrial access to a UE 210 by using an NTN payload 220 and an NTN gateway 230. Here, the UE 210 may have the actually same configuration as that of the terminal 110 described in FIG. 1. Referring to FIG. 2, a link between the NTN payload 220 and the UE 210 is a service link and may be based on a Uu interface. A link between the NTN payload 220 and the NTN gateway 230 is a feeder link. A link between the NTN gateway and an AMF/UPF 240 may be based on an NG interface. The NTN payload 220 may transparently forward a wireless protocol received from the UE 210 via a service link to the NTN gateway 230. Similarly, the NTN payload 220 may transparently forward a wireless protocol received from the NTN gateway 230 via a feeder link to the UE 210.

To this end, the NTN payload 220 may support the following connectivity. A base station may serve a plurality of NTN payloads. An NTN payload may be served by a plurality of base stations.

The NTN payload 220 may change a carrier frequency before retransmitting data on a service link. That is, the NTN payload 220 may use different carrier frequencies for a service link and a feed link. For NTN, at least one of an AMF name, an NR cell global identifier (NCGI), a CgNB identifier (ID), a gNB ID, a tracking area identity, single network slice selection assistance information (S-NSSAI), a network slice AS group (NSAG), a network identifier (NID), a closed assess group (CAG) ID, and a local NG-RAN node identifier (ID) may be used as a network identifier, and in addition a mapped cell ID may further be used. Herein, a tracking area may correspond to a fixed geographical area.

Non-Geosynchronous Orbit (NGSO) includes low Earth orbit (LEO), which ranges from approximately 300 km to 1,500 km in altitude, as well as medium Earth orbit (MEO), which ranges from about 7,000 km to 25,000 km in altitude.

Service links may be classified into the following three types: earth-fixed type, quasi-earth-fixed type, and earth-moving type. The earth-fixed type provides a beam(s) continuously covering a same geographical area at every time. For example, a satellite in a geosynchronous orbit (GSO) may provide earth-fixed type service links. The quasi-earth-fixed type provides beams that continuously cover the same geographic area during a limited period, and during other periods, provides beams that cover different geographic areas. For example, a satellite in an NGSO may provide a quasi-earth-fixed type service link by using steerable beams. The earth-moving type provides beams whose coverage areas slide across the Earth's surface. For example, a satellite in an NGSO may provide an earth-moving type service link by using fixed or steerable beams.

By using a satellite in an NGSO, a base station may provide a quasi-earth-fixed cell coverage or an earth-moving cell coverage. By using a satellite in a GSO, a base station may provide an earth-fixed cell coverage. In the case of a NGSO, a switch of service links may refer to a switch of the serving satellite 120-1.

Recently, 3GPP is working on standardization associated with a handover in an NTN. In Rel-17, it was determined to support a CHO to reduce a handover failure rate, and in Rel-18, it was determined to support a RACH-less handover to reduce signaling overhead occurring due to a RACH and reduce a handover interruption time in an NTN environment. In addition, a method of combining a CHO and a RACH-less handover in an NTN environment is under discussion. When the two handover techniques are combined, since a non-terrestrial base station is not aware of a handover execution timing of a terrestrial terminal, an uplink grant may be difficult to transmit through a PDCCH. Accordingly, in order to solve this problem, the present disclosure proposes a technique of combining a CHO and a RACH-less handover based on a timing.

FIG. 3 illustrates a configuration of a device in a wireless communication system according to an embodiment of the present disclosure. The device of FIG. 3 may be understood as a partial structure of any one of devices described with reference to FIG. 1, such as the terminal 110, the satellites 120-1 and 120-2, the gateway 130, and the base station 140.

Referring to FIG. 3, the device may include a processor 210, a communication unit 220, and a memory 330.

The processor 310 may control the overall functions and operations of the device. The processor 310 may include an application-specific integrated circuit (ASIC), another chipset, a logic circuit and/or a data processing device.

The communication unit 320 is connected to the processor 310 and transmits and receives wireless signals. The communication unit 320 may include a baseband circuit for processing wireless signals. For example, the communication unit 320 may include a short-range communication unit, a mobile communication unit, and a broadcast receiving unit. In an embodiment, the communication unit 320 may transmit and receive data with other devices, such as base stations, satellites, and so on.

The memory 330 is hardware that stores various types of data processed by the processor 310. For example, the memory 330 may store an SIR value for a target terminal of a transmitting terminal, as well as information regarding a group of target terminals for each transmitting terminal. In addition, the memory 330 may store applications, drivers, and so on, which are to be executed by the processor 310. The memory (330) may include random access memory (RAM) such as dynamic random access memory (DRAM) and static random access memory (SRAM), read-only memory (ROM), electrically erasable programmable read-only memory (EEPROM), CD-ROM, Blu-ray or other optical disk storage, hard disk drive (HDD), solid state drive (SSD), or flash memory.

The structure of FIG. 3 may be understood as at least a part of a terminal, a base station, a satellite, and a gateway. When the structure of FIG. 3 is a part of a satellite, the satellite may further include other hardware devices for orbital flight, apart from the components exemplified in FIG. 3. When the structure of FIG. 3 is a part of a gateway or a base station, the gateway or the base station may further include a component for supporting wired communication.

When the quality of a radio link is degraded or the radio link is interrupted in a wireless communication system, a radio link failure may occur. The radio link failure may be detected and treated in various layers of a network. As an example, a terminal may declare a radio link failure when a radio problem timer expires after radio problem detection from a physical layer, a RACH procedure fails, or an uplink listen-before-talk (LBT) failure is detected.

Meanwhile, a network in which a terrestrial network and an NTN are present together may maximize the flexibility and efficiency of a communication system, thereby providing better service quality to a user. For example, in a situation in which a serving cell is an NTN, when an RLF occurs during a handover from a terminal to a terrestrial cell, the terminal may perform an RRE.

Specifically, after a radio link failure is declared, the terminal searches for a suitable cell and performs an RRE. However, when such a suitable cell is not found for a predetermined time, the terminal transitions to an RRC IDLE state.

As an example, when a source cell radio link failure occurs during a DAPS handover, the terminal may stop data transmission or reception using a source link and release the source link or may maintain a source RRC configuration value and reuse necessary configuration information later. When a handover failure to a target cell is declared, the terminal selects a suitable cell to attempt a RRE, and when such a suitable cell is not found for a predetermined time, the terminal transitions to the RRC IDLE state and declares a handover failure.

In addition, as an example, when the source cell radio link failure occurs during a CHO, the terminal searches for a suitable cell. In addition, when a selected cell is a candidate cell of a CHO and the terminal is configured to attempt a CHO after a radio link failure of a network, the terminal reattempts the CHO or performs an RRE. After the radio link failure, when the terminal fails to search for a suitable cell within a predetermined time, the terminal transitions to the RRC IDLE state.

As described above, for a DAPS handover and a CHO, there is a case in which an RRE is not performed even when a radio link failure occurs in a source cell. For example, even when a target cell transmits a handover command and then a radio link failure occurs, a terminal does not perform an RRE but performs a handover to the target cell. In most cases excluding this case, when a radio link failure occurs, the terminal performs the RRE to a serving cell. On the other hand, when the serving cell is a non-terrestrial cell (or an NTN serving cell) and a radio link failure occurs at the edge of the non-terrestrial cell, the terminal is likely to perform a handover again within a short time due to the mobility of the non-terrestrial cell even if the terminal performs an RRE, and the RRE is also likely to fail. Accordingly, hereinafter, there is provided a method of a terminal to perform cell reselection to a terrestrial cell after transitioning to the RRC IDLE state without performing an RRE, when the priority of a target cell is a the terrestrial cell and the terminal is present at the edge of a non-terrestrial cell or near the boundary of the non-terrestrial cell.

Meanwhile, radio link monitoring (RLM) in a RRC connection state may be considered as a standard procedure associated with the present disclosure. A terminal may perform RLM according to a reference signal (e.g., an SSB or a CSI-RS) and a signal quality threshold set by a network in a bandwidth part (BWP) that is activated in the RRC connection state. SSB-based RLM is performed based on a cell defining SSB (CD-SSB) that is connected to an initial DL BWP, and may be configured at the initial DL BWP or a DL BWP including the CD-SSB. In addition, a terminal may perform RLM based on a non-cell defining SSB. Furthermore, CSI-RS-based RLM may be also performed when being configured at an activated DL BWP. During a DAPS handover, a terminal may continuously detect a radio link failure at a source cell until a random access procedure is successfully completed at a target cell. The terminal may detect the radio link failure when a timer starting after detection of a radio problem at a physical layer expires (e.g., the timer stops when the radio problem is solved), a timer set at a measurement report trigger expires, another radio problem timer is operating, a RACH procedure fails, and radio link control fails.

When a shared spectrum channel is used and consistent uplink LBT failure is detected, an IAB-MT may declare radio link failure upon receiving backhaul radio link failure.

After radio link failure, the terminal may maintain a RRC configuration value. For example, when radio link failure occurs at a source cell during a DAPS handover, the terminal may stop data transmission/reception on a source link and release the source link but maintain a source RRC configuration.

Meanwhile, when handover failure is declared at a target cell, the terminal may select a suitable cell and initiate an RRE. In addition, when the suitable cell is not found within a predetermined time, the terminal transitions to the RRC IDLE state.

Meanwhile, when radio link failure occurs at a source cell during a CHO, the terminal may select a suitable cell, and when the cell is a candidate cell of the CHO and a network configures a CHO attempt, the terminal attempts to perform the CHO. When not attempting the CHO, the terminal performs an RRE. In addition, when the suitable cell is not found within a predetermined time, the terminal transitions to the RRC IDLE state.

Meanwhile, when radio link failure occurs at a source cell of MCG local triggered mobility (MCG LTM), the terminal selects a suitable cell and attempts RACH-based LTM when the selected cell is an LTM candidate cell. When the terminal does not perform RACH-based LTM, the terminal performs an RRE. Specifically, when no suitable cell is found, the terminal transitions to the RRC IDLE state, and otherwise, the terminal selects a suitable cell to attempt the RRE.

Meanwhile, when RLF occurs on an IAB backhaul link, the same mechanism and procedure as those on an access link may be applied to the terminal. As an example, backhaul radio link failure detection and radio link failure recovery may be included.

An integrated access and backhaul-distributed unit (IAB-DU) may transmit a backhaul radio link failure (BH RLF) detection indication to a child node in a following case. For example, when an IAM-MT initiates an RRE and detects radio link failure on a backhaul link in a dual-connected state, UL rerouting is impossible, the IAM-MT receives a BH RLF detection indication from a parent node, and there is no backhaul link free from the impact of a radio link failure condition, the IAM-DU may transmit the BH RLF detection indication to a child node.

When receiving the BH RLF detection indication, the child node may perform local rerouting for upstream traffic through an available backhaul link. During radio link failure recovery, the IAB-DU may transmit a BH RLF recovery indication to the child node. When receiving the BH RLF recovery indication, the child node may revert a previously performed operation. Upon failure of radio link failure recovery at an IAB node, for example, when an RRE procedure fails, the IAB node may transmit a BH RLF indication to a child node. A BH RLF detection indication, a recovery indication, and a radio link failure indication may be transmitted to a BAP (Control PDU).

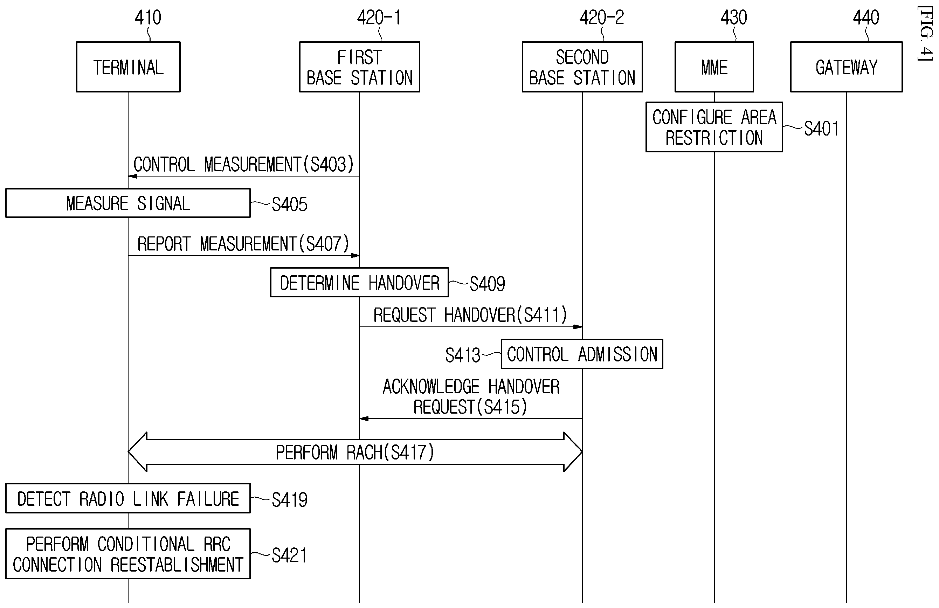

FIG. 4 illustrates an example of a procedure for omitting a conditional RRE in a wireless communication system according to an embodiment of the present disclosure. A first base station 420-1 is a serving cell and may be a non-terrestrial cell. Additionally, a second base station 420-2 is a target cell, and the second base station 420-2 may correspond to any one of a non-terrestrial cell and a terrestrial cell. The first base station 420-1 may be referred to as a source gNB or a source eNB, and similarly, the second base station 420-2 may be referred to as a target gNB or a target eNB.

In addition, although not shown in FIG. 4, a wireless communication system according to an embodiment of the present disclosure may further include a third base station, and the third base station may be a target for cell reselection. As an example, the third base station may be a different type of base station from the second base station 420-2, and for example, when the second base station 420-2 is a non-terrestrial cell, the third base station may be a terrestrial cell.

Referring to FIG. 4, in step S401, a mobility management entity (MME) 430 configures area restriction. The MME 430 is a control node and may be an entity responsible for signal processing between a terminal 410 and a network, mobility management, session setup, and the like in a control plane. Specifically, the MME 430 may provide area restriction to enable area-based access control, thereby restricting or allowing access of the terminal 410 in a specific area. As an example, the MME 430 may set a restriction on a specific service through the area restriction, and for example, the MME 430 may set a regulation to restrict a high-speed data service in a specific area or to allow only voice calls or low-speed data. In addition, the MME 430 may set area restriction to restrict roaming, reject handover to a specific area, or restrict the terminal 410 from accessing a security area such as a military base or a government agency.

In step S403, the first base station 420-1 transmits information on measurement control to the terminal 410. Specifically, the first base station 420-1 transmits a measurement control message requesting the terminal 410 to perform measurements on frequencies, cells, signal quality, and the like. As an example, the measurement control message may include information on measurement items such as signal-to-interference-and-noise ratio (SINR), reference signal received quality (RSRQ), and reference signal received power (RSRP).

In step S405, the terminal 410 measures a signal. Specifically, the terminal 410 measures signal strengths of the base stations 420-1 and 420-2 to reserve resources for handover. The terminal 410 may measure the strength of a signal at a predetermined cycle, and the predetermined cycle may be referred to as a measurement interval in the present disclosure.

Specifically, the terminal 410 may measure the signal strengths of the base stations 420-1 and 420-2 to detect a preparation event for handover. As an example, when the strength or quality of a measured signal is less than or equal to a predefined threshold or within a predetermined range, the terminal 410 may determine that a preparation event for a handover is detected. In addition, as an example, when the strength or quality of a signal provided by the second base stations 420-2 exceeds the strength or quality of a signal provided by the first base station 420-1 that is a serving cell by a specific threshold, the terminal 410 may determine that a preparation event for a handover is detected.

Meanwhile, the terminal 410 and the first base station 420-1, and the first base station 420-1 and the gateway 440 may exchange packet data (or user data). The gateway 440 manages user data traffic and may perform handover, data buffering, and data traffic management during roaming.

In addition, the first base station 420-1 may allocate an uplink (UL) to the terminal 410. The allocation of the uplink is a process of allocating a resource required for the terminal 410 to transmit data to the first base station 420-1 that is a serving cell, and the uplink refers to a path through which the terminal 410 transmits data to the first base station 420-1. Uplink allocation may be performed through L1 signaling or L2 signaling, and the L1 signaling is a physical layer and may include all operations related to the transmission and reception of actual radio signals. The L2 signaling is a data link layer and may include operations related to direct data transmission and connection maintenance.

In step S407, the terminal 410 transmits a measurement report to the first base station 420-1. Specifically, the terminal 410 periodically measures the strength of signals of the first base station 420-1 and other base stations (not shown) and transmits a measurement report message. The measurement report may include at least a portion of set elements of the measurement report. For example, the measurement configuration of a measurement report may include a measurement object, a reporting configuration, a measurement ID, a quantity configuration, and a measurement gap. As an example, the terminal 420 may measure at least one of the SINRs, RSRQs, and RSRPs of the first base station 420-1 and other base stations. Furthermore, the terminal 410 may measure a received signal strength indicator (RSSI), which is the power strength of a received signal, and a signal to noise ratio (SNR) that is a ratio between a signal and noise, but is not limited thereto.

In step S409, the first base station 420-1 determines a handover. Specifically, the first base station 420-1 identifies at least one of RSRP, RSRP, or SINR through the received measurement report. Here, the first base station 420-1 may determine a handover when the measured strength or quality of a signal is less than or equal to a predefined threshold or within a predetermined range. In addition, as an example, when the strength or quality of signals provided by other base stations exceeds the strength or quality of a signal provided by the first base station 420-1 that is a serving cell by a specific threshold, the first base station 420- 1 may determine a handover. The above-described process may be understood as a process of the first base station 420-1 to detect a triggering event from a measurement report.

In step S411, the first base station 420-1 transmits a handover request. Specifically, the first base station 420-1 transmits a handover request message to a target cell. The target cell may be determined based on measurement reports for other base stations. As an example, the target cell may be determined based on RSRP, an RSSI, RSRQ, and an SINR for another base station, a traffic load of each base station, a priority order, a speed of the terminal 410, a frequency band, a call state, and UE capabilities. Hereinafter, for convenience of description, it is assumed that the second base station 420-2 is determined to be a target cell, and the second base station 420-2 may be a non-terrestrial cell.

The handover request message includes information on the terminal 410 and may include a UE identity, a source cell ID, a target cell ID, a terminal context, target cell information, an E-UTRAN radio access bearer (E-RAB), and the like, and is not limited thereto. Here, the handover request message may be transmitted through an inter satellite link (ISL) or a feeder link.

In step S413, the second base station 420-2 that is a target cell performs admission control. Specifically, the second base station 420-2 determines whether to accept a handover request based on the handover request message and may reject the handover request when network resources are insufficient or quality degradation is concerned. For example, the second base station 420-2 may determine whether to accept the handover request by calculating an available bandwidth, frequency resources, a cell capacity, quality of service (QoS) requirements, and the like.

In step S415, the second base station 420-2 transmits a handover request acknowledge to the first base station 420-1. Specifically, the second base station 420-2 transmits a handover request acknowledge message to the first base station 420-1 when it is determined that a handover is possible as a result of performing the admission control.

Meanwhile, the first base station 420-1 may allocate a downlink (DL) to the terminal 410. Downlink refers to a path through which a network (e.g., a nonterrestrial cell or a terrestrial cell) transmits data to the terminal 410, and downlink allocation refers to a process in which the network allocates a radio resource to enable the terminal 410 to receive data.

In addition, the first base station 420-1 may transmit a handover command. Specifically, the first base station 420-1 may transmit a handover command message to the terminal 410. The handover command message may include information on the second base station 420-2 that is a target cell, and the information may include a C-RNTI, a timing advance (TA), and location information. Thus, the first base station 420-1 may allocate a radio network temporary identifier (RNTI) (e.g., a group (G)-RNTI, a C-RNTI) for broadcast or multicast to the terminal 410. The corresponding RNTI may be provided in advance through system information or may be provided together with a configuration for measurement. The aforementioned steps S401 to S415 may be referred to as a handover preparation step and may be understood as a process of reserving a resource for performing a handover.

In step S417, the terminal 410 performs RACH. The terminal 410 obtains uplink grant information of the first base station 420-1 through a RACH procedure and may transmits a handover confirm message to the second base station 420-2 by utilizing the uplink grant information. Specifically, the terminal 410 transmits a preamble to the second base station 420-2, and the second base station 420-2 may transmit a response to a random access (RA) to the terminal 410. Next, the terminal 410 may transmit a radio resource control (RRC) connection reconfiguration complete to the second base station 420-2 to notify that a radio resource configuration according to an RRC connection complete is normally applied.

In step S419, the terminal 410 detects radio link failure. As an example, the terminal 410 may declare a radio link failure when a radio problem timer expires after radio problem detection from a physical layer, a RACH procedure fails, or an uplink listen-before-talk (LBT) failure is detected. In addition, the terminal 410 may detect or declare a radio link failure (RLF) when signal measurement values such as RSRP, RSRQ, and SINR drop below a predetermined threshold. In the present disclosure, the description focuses on the terminal 410 declaring the RLF during handover, but it is not limited thereto. As long as it does not conflict with the present disclosure, it may also include a case where the RLF is declared in various layers where data packet transmission, channel access, and the like are performed.

In step S421, the terminal 410 performs a conditional RRE. Specifically, the terminal 410 may not immediately perform a RRE but may perform the conditional RRE and transition to an RRC idle state when performing cell reselection. Meanwhile, when the terminal 410 immediately performs the RRE upon detecting the RLF, a case may occur where handover is performed again within a short period of time, and the RRE is also highly likely to fail. For example, when the terminal 410 is located near a coverage boundary of the first base station 420-1 that is a non-terrestrial cell, handover may be required immediately due to the mobility of the first base station 420-1 that is not fixed, even if the RRE is performed. Accordingly, the terminal 410 according to the present disclosure may perform cell reselection or perform a RRE to the first base station 420-1 that is the serving cell, depending on whether conditions for RRE to the existing serving cell and cell reselection to a cell other than the serving cell are satisfied. Here, since the cell reselection is performed when the conditions are satisfied, a condition proposed in the present disclosure may be referred to as a condition for skipping RRE, a condition for performing cell reselection, or a term representing an equivalent technical meaning. Hereinafter, for convenience of description, the proposed condition is referred to as a cell reselection condition.

The terminal 410 may consider cell priority, a signal measurement value, and/or available connection time as a cell reselection condition. As an example, the terminal 410 may examine a priority of a target candidate terrestrial cell for performing cell reselection. Specifically, the terminal 410 may determine whether a terrestrial cell is set as a priority for performing cell reselection. In addition, as an example, the terminal 410 may determine whether signal measurement values such as RSRP and RSRQ values of the first base station 420-1 that is the serving cell are less than a predetermined threshold. In addition, as an example, the terminal 410 may check an available connection time with the first base station 420-1 that is the serving cell. That is, the terminal 410 may examine the above-described conditions to identify a success probability of RRE and a possibility that handover is required again. Meanwhile, the terminal 410 may maintain RRC configuration values when radio link failure occurs.

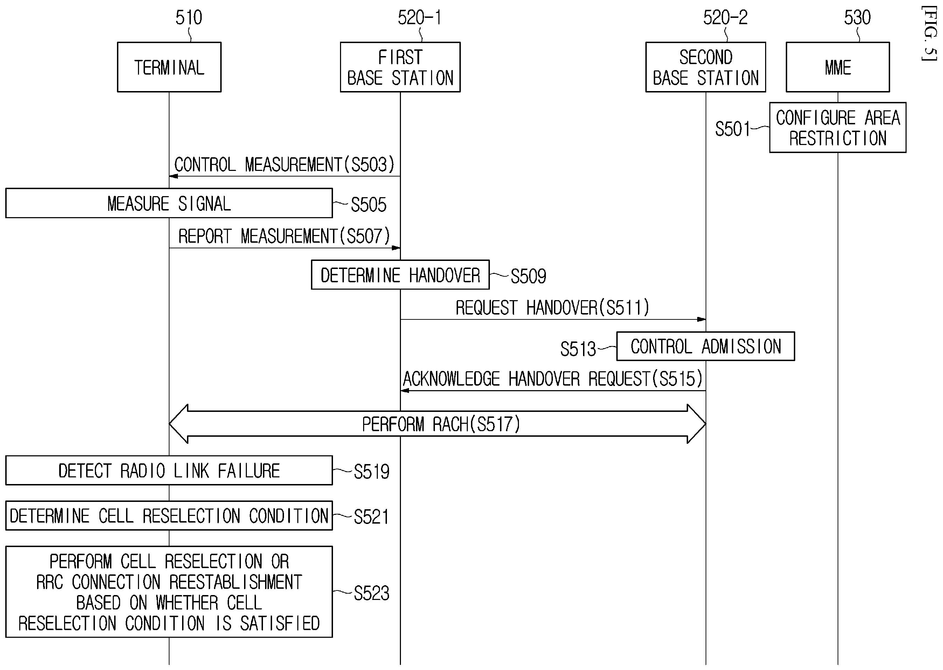

FIG. 5 illustrates an example of a conditional RRC connection re-establishment procedure according to determination of a cell reselection condition in a wireless communication system according to an embodiment of the present disclosure. A first base station 420-1 is a serving cell and may be a non-terrestrial cell. Additionally, a second base station 420-2 is a target cell, and the second base station 420-2 may correspond to any one of a non-terrestrial cell and a terrestrial cell. The first base station 420-1 may be referred to as a source gNB or a source eNB, and similarly, the second base station 420-2 may be referred to as a target gNB or a target eNB.

In addition, although not shown in FIG. 5, a wireless communication system according to an embodiment of the present disclosure may further include a third base station, and the third base station may be a target for cell reselection. As an example, the third base station may be a different type of base station from the second base station 420-2, and for example, when the second base station 420-2 is a non-terrestrial cell, the third base station may be a terrestrial cell.

Referring to FIG. 5, in step S501, an MME 530 sets area restriction. The MME 530 is a control node and may be an entity responsible for signal processing between a terminal 510 and a network, mobility management, session setup, and the like in a control plane. Specifically, the MME 530 may provide area restriction to enable area-based access control, thereby restricting or allowing access of the terminal 510 in a specific area. As an example, the MME 530 may set a restriction on a specific service through the area restriction, and for example, the MME 430 may set a regulation to restrict a high-speed data service in a specific area or to allow only voice calls or low-speed data. In addition, the MME 530 may set area restriction to restrict roaming, reject handover to a specific area, or restrict the terminal 510 from accessing a security area such as a military base or a government agency.

In step S503, the first base station 520-1 transmits measurement control to the terminal 510. Specifically, the first base station 520-1 transmits a measurement control message requesting the terminal 510 to perform measurements on frequencies, cells, signal quality, and the like. As an example, the measurement control message may include information on measurement items such as SINR, RSRQ, and RSRP.

In step S505, the terminal 510 measures a signal. Specifically, the terminal 510 measures signal strengths of the base stations 520-1 and 520-2 to reserve resources for handover. The terminal 510 may measure the strength of a signal at a predetermined cycle, and the predetermined cycle may be referred to as a measurement interval in the present disclosure.

Specifically, the terminal 510 may measure the signal strengths of the base stations 520-1 and 520-2 to detect a preparation event for handover. As an example, when the strength or quality of a measured signal is less than or equal to a predefined threshold or within a predetermined range, the terminal 510 may determine that a preparation event for a handover is detected. In addition, as an example, when the strength or quality of a signal provided by the second base stations 520-2 exceeds the strength or quality of a signal provided by the first base station 520-1 that is a serving cell by a specific threshold, the terminal 510 may determine that a preparation event for a handover is detected.

In step S507, the terminal 510 transmits a measurement report to the first base station 520-1. Specifically, the terminal 510 periodically measures the strength of signals of the first base station 520-1 and other base stations (not shown) and transmits a measurement report message. The measurement report may include at least a portion of set elements of the measurement report. For example, a measurement configuration of a measurement report may include a measurement object, a reporting configuration, measurement identities, a quantity configuration, and a measurement gap. As an example, the terminal 510 may measure at least one of the SINRs, RSRQs, and RSRPs of the first base station 520-1 and other base stations. Furthermore, the terminal 510 may measure a received signal strength indicator (RSSI), which is the power strength of a received signal, and a signal to noise ratio (SNR) that is a ratio between a signal and noise, but is not limited thereto.

In step S509, the first base station 520-1 determines a handover. Specifically, the first base station 520-1 identifies at least one of RSRP, RSRP, or SINR through the received measurement report. Here, the first base station 520-1 may determine a handover when the measured strength or quality of a signal is less than or equal to a predefined threshold or within a predetermined range. In addition, as an example, when the strength or quality of signals provided by other base stations exceeds the strength or quality of a signal provided by the first base station 520-1 that is a serving cell by a specific threshold, the first base station 520- 1 may determine a handover. The above-described process may be understood as a process of the first base station 520-1 to detect a triggering event from a measurement report.

In step S511, the first base station 520-1 transmits a handover request. Specifically, the first base station 520-1 transmits a handover request message to a target cell. The target cell may be determined based on measurement reports for other base stations. As an example, the target cell may be determined based on RSRP, an RSSI, RSRQ, an SINR for the base stations, a traffic load of each base station, a priority order, a speed of the terminal, a frequency band, a connection status, and UE capabilities. Hereinafter, for convenience of description, it is assumed that the second base station 520-2 is determined to be a target cell, and the second base station 520-2 may be a non-terrestrial cell.

The handover request message includes information on the terminal 510 and may include a UE identity, a source cell ID, a target cell ID, a terminal context, target cell information, an E-UTRAN radio access bearer (E-RAB), and the like, and is not limited thereto. Here, the handover request message may be transmitted through an ISL or a feeder link.

In step S513, the second base station 520-2 that is the target cell performs admission control. Specifically, the second base station 520-2 determines whether to accept a handover request based on the handover request message and may reject the handover request when network resources are insufficient or quality degradation is concerned. For example, the second base station 520-2 may determine whether to accept the handover request by calculating an available bandwidth, frequency resources, a cell capacity, quality of service (QoS) requirements, and the like.

In step S515, the second base station 520-2 transmits a handover request acknowledge to the first base station 520-1. Specifically, the second base station 520-2 transmits a handover request acknowledge message to the first base station 520-1 when it is determined that a handover is possible as a result of performing the admission control.

Meanwhile, the first base station 520-1 may transmit a handover command. Specifically, the first base station 520-1 may transmit a handover command message to the terminal 510. The handover command message may include information on the second base station 520-2 that is a target cell, and the information may include a C-RNTI, a timing advance (TA), and location information. Thus, the first base station 520-1 may allocate a radio network temporary identifier (RNTI) (e.g., a group (G)-RNTI, a C-RNTI) for broadcast or multicast to the terminal 510. The corresponding RNTI may be provided in advance through system information or may be provided together with a configuration for measurement. The aforementioned steps S501 to S515 may be referred to as a handover preparation step and may be understood as a process of reserving a resource for performing a handover.

In step S517, the terminal 510 performs RACH. The terminal 510 obtains uplink grant information of the first base station 520-1 through a RACH procedure and may transmits a handover confirm message to the second base station 520-2 by utilizing the uplink grant information. Specifically, the terminal 510 transmits a preamble to the second base station 520-2, and the second base station 520-2 may transmit a response to a random access (RA) to the terminal 510. Next, the terminal 510 transmits a radio resource control (RRC) connection reconfiguration complete to the second base station 520-2 to notify that a radio resource configuration according to an RRC connection complete is normally applied.

In step S519, the terminal 510 detects radio link failure. As an example, the terminal 510 may detect or declare a RLF when a radio problem timer expires after a radio problem is detected from a physical layer, a RACH procedure fails, an RLC failure occurs, or an uplink LBT failure is detected. In addition, the terminal 510 may detect or declare a radio link failure (RLF) when signal measurement values such as RSRP, RSRQ, and SINR drop below a predetermined threshold. In the present disclosure, the description focuses on the terminal 510 declaring the RLF during handover, but it is not limited thereto. As long as it does not conflict with the present disclosure, it may also include a case where the RLF is declared in various layers where data packet transmission, channel access, and the like are performed.

In step S521, the terminal 510 determines a cell reselection condition. Specifically, the terminal 510 may not immediately perform a RRE but determine the cell reselection condition to transition to an RRC idle state when performing cell reselection.

Specifically, the terminal 510 may consider the priority of a cell, a signal measurement value, and/or available connection time as a cell reselection condition. As an example, the terminal 510 may examine a priority of a target candidate terrestrial cell for performing cell reselection. Specifically, the terminal 510 may determine whether a terrestrial cell is set as a priority for performing cell reselection. In an area where the first base station 520-1 that is a non-terrestrial cell and a terrestrial cell coexist, a terrestrial network may be suitable for services requiring a high data rate and low latency. Accordingly, in order to consider different characteristics of the terrestrial network and a non-terrestrial network and to improve user experience, the terminal 510 selects a cell among terrestrial cells or non-terrestrial cells for cell camping or RRC connection configuration according to a potential service, a mobility state, or an operator's plan. That is, priorities for terrestrial cells and non-terrestrial cells in performing cell reselection for RRE of the terminal 510 may be predetermined. As an example, in cell reselection, a terrestrial cell may be assigned an absolute priority. Accordingly, the terminal 510 may examine whether a terrestrial cell has been assigned a priority in order to perform cell reselection.

In addition, as an example, the terminal 510 may determine whether signal measurement values such as RSRP and RSRQ values of the first base station 520-1 that is the serving cell are less than a predetermined threshold. Specifically, when at least one of RSRP and RSRQ of the first base station 520-1 is low, signal quality is poor, which may increase a failure probability of RRE. Accordingly, the terminal 510 examines the possibility of failure by comparing at least one of the RSRP and RSRQ values of the first base station 520-1 with a threshold.

In addition, as an example, the terminal 510 may check an available connection time with the first base station 520-1 that is the serving cell. Specifically, when the terminal 510 is located near a coverage boundary of the first base station 520-1, signal quality may be degraded, and even if RRC reconnection is performed, it is highly likely that handover will need to be performed within a short period of time due to the mobility of the first base station 520-1 that is not fixed. This may be a factor that decreases network performance. Accordingly, the terminal 510 checks an available connection time to consider a relative position in relation to the first base station 520-1. That is, the terminal 510 may examine the above-described conditions to identify a success probability of RRE and a possibility that handover is required again.

In step S523, the terminal 510 performs cell reselection or RRE based on whether a cell reselection condition is satisfied. Specifically, if a terrestrial cell is assigned a priority, the terminal 510 transitions to RRC_IDLE and then performs terrestrial cell reselection. Meanwhile, if a non-terrestrial cell is assigned a priority as a result of reviewing priorities of target candidate terrestrial cells for performing cell reselection, the terminal 510 may perform handover to the second base station 520-2 that is a target cell again or perform RRE to the first base station 520-1 that is an existing serving cell.

In addition, if signal measurement values, for example, RSRP and RSRQ values of the first base station 520-1 which is the serving cell are less than a predetermined threshold, the terminal 510 transitions to RRC_IDLE and then performs terrestrial cell reselection. Meanwhile, if the RSRP and RSRQ values of the first base station 520-1 that is the serving cell are equal to or greater than the predetermined threshold, the terminal 510 may perform handover again or perform RRE to the first base station 520-1.

In addition, if an available connection time between the first base station 520-1 that is the serving cell and the terminal 510 is less than a predetermined threshold, the terminal 510 transitions to RRC_IDLE and then performs terrestrial cell reselection. Meanwhile, if the available connection time between the first base station 520-1 that is the serving cell and the terminal 510 is equal to or greater than the predetermined threshold, the terminal 510 may perform handover again or perform RRE to the first base station 520-1.

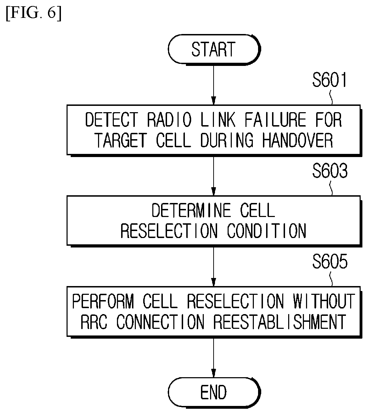

FIG. 6 illustrates an example of a procedure of performing cell reselection upon detecting radio link failure (RLF) during a handover according to an embodiment of the present disclosure.

Referring to FIG. 6, in step S601, a terminal detects RLF with respect to a target cell during handover. The terminal may receive measurement control from a serving cell, measure signals for neighboring base stations, and transmit a measurement report message to the serving cell. When a handover is determined at the serving cell and a handover command is received from the serving cell, the terminal performs handover to the target cell. Meanwhile, the terminal may declare RLF when a radio problem timer expires after detecting a radio problem from a physical layer, a RACH procedure fails during an attempt of handover, an RLC failure occurs, or an uplink LBT failure is detected. In addition, the terminal may declare RLF when signal measurement values such as RSRP, RSRQ, and SINR drop below a predetermined threshold.

In step S603, the terminal determines a cell reselection condition. Specifically, even when RLF is detected, the terminal may not immediately perform RRE but examine a cell reselection condition for cell reselection to transition to a RRC idle state during cell reselection.

As an example, the terminal may consider a priority of a cell as a cell reselection condition. For example, the terminal may examine the priorities of target candidate terrestrial cells as the cell reselection condition. Specifically, the terminal may determine whether a terrestrial cell is set as a priority for performing cell reselection. In order to consider different characteristics of the terrestrial network and a non-terrestrial network and to improve user experience, the terminal may select a cell among terrestrial cells or non-terrestrial cells for cell camping or RRC connection configuration according to a potential service, a mobility state, or an operator's plan.

For example, the terminal may examine whether a terrestrial cell has been assigned a priority in order to perform cell reselection.

In addition, as an example, the terminal may consider the strength of a signal as a cell reselection condition. For example, the terminal may determine whether signal measurement values such as the RSRP and RSRQ values of the serving cell are less than a predetermined threshold. Specifically, when at least one of the RSRP and RSRQ of the serving cell is low, signal quality is poor, which may increase a failure probability of RRE. Accordingly, when at least one of the RSRP and RSRQ of the serving cell has a value less than the predetermined threshold, the terminal may reselect a terrestrial cell.

In addition, as an example, the terminal may consider an available connection time with the serving cell as a cell reselection condition. Specifically, when the terminal is located near a coverage boundary of the serving cell that is a non-terrestrial cell, signal quality may be degraded, and even if RRC reconnection is performed, it is highly likely that handover will need to be performed within a short period of time due to the mobility of the non-terrestrial cell that is not fixed. This may be a factor that decreases network performance. Accordingly, the terminal identifies an available connection time to consider a relative position to the serving cell. As an example, when the available connection time is less than a predetermined, the terminal may reselect a terrestrial cell. That is, the terminal may examine the above-described conditions to identify a success probability of RRE and a possibility that handover is required again.

In step S605, the terminal performs cell reselection without RRE. Specifically, the terminal performs cell reselection based on whether a cell reselection condition is satisfied. Specifically, when a terrestrial cell is assigned a priority, the terminal transitions to RRC_IDLE and then performs terrestrial cell reselection. In addition, when signal measurement values such as the RSRP and RSRQ values of the serving cell are less than a predetermined threshold, the terminal transitions to RRC_IDLE and then performs terrestrial cell reselection. In addition, when an available connection time between the serving cell and the terminal is less than a predetermined threshold, the terminal transitions to RRC_IDLE and then performs terrestrial cell reselection.

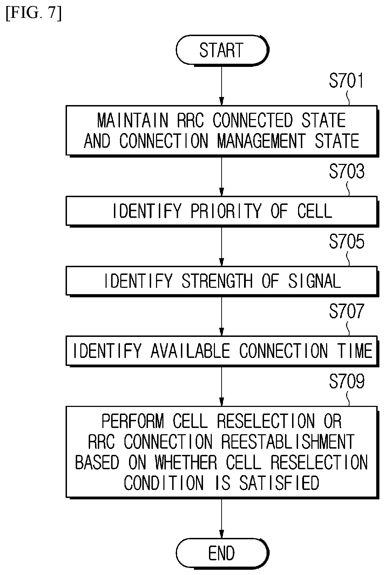

FIG. 7 illustrates an example of a procedure of operating a terminal in a wireless communication system according to an embodiment of the present disclosure.

Referring to FIG. 7, in step S701, the terminal maintains an RRC connected state and a connection management state. Specifically, the terminal may detect an RLF while maintaining communication with a serving cell. For example, the terminal may declare the RLF when a radio problem timer expires after detecting a radio problem from a physical layer, a RACH procedure fails, an RLC failure occurs, or an uplink LBT failure is detected. In addition, the RLF may occur when signal measurement values such as RSRP, RSRQ, and SINR drop below a predetermined threshold. Without being limited thereto, the declaration of the RLF by the terminal may include being declared in various layers where data packet transmission, channel access, and the like are performed.

In step S703, the terminal identifies the priority of a cell. Specifically, upon detecting the RLF, the terminal identifies the priority of an RRC cell as a cell reselection condition without immediately performing RRE. As an example, the terminal may examine the priority of a target candidate terrestrial cell for performing cell reselection. That is, the terminal may determine whether a terrestrial cell is set as a priority for performing cell reselection. In an area where a non-terrestrial cell and a terrestrial cell coexist, a terrestrial network may be suitable for a service requiring a high data rate and low latency. Accordingly, in order to consider different characteristics of the terrestrial network and the non-terrestrial network and to improve user experience, the terminal selects a cell from the terrestrial cell and the non-terrestrial cell for cell camping or RRE according to a potential service, a mobility state, or an operator's plan.

The priority for a terrestrial cell and a non-terrestrial cell in performing cell reselection for RRE of the terminal may be determined in advance. As an example, in cell reselection, the terrestrial cell may be given an absolute priority. Accordingly, the terminal may examine whether the terrestrial cell is given priority to perform cell reselection. As an example, when the terrestrial cell is given priority, the terminal may consider performing terrestrial cell reselection after transitioning to RRC IDLE, while further examining the signal strength. In addition, as an example, when RLF occurs in a situation where a serving cell and a target cell are non-terrestrial cells and a result of the terminal examining the priority of the cell to perform cell reselection shows that the non-terrestrial cell is given priority, the terminal may perform handover to the non-terrestrial cell that is a target cell again or perform RRE to the existing serving cell.

In step S705, the terminal identifies the signal strength. Specifically, the terminal may determine whether signal measurement values such as RSRP and RSRQ values of the serving cell, are less than a predetermined threshold as a cell reselection condition. Specifically, when at least one of the RSRP and RSRQ of the serving cell is low, signal quality is poor, which may increase a failure probability of RRE. Accordingly, the terminal examines the possibility of RRE failure by comparing at least one value of the RSRP and RSRQ of the serving cell with the threshold. It goes without saying that the terminal may further examine SINR, RSSI, and SNR as cell reselection conditions.

As an example, when the RSRP and RSRQ values of the non-terrestrial cell that is the serving cell are less than a predetermined threshold, the terminal may consider performing terrestrial cell reselection after transitioning to RRC IDLE, while further examining an available connection time. Meanwhile, when the RSRP and RSRQ values of the serving cell are greater than or equal to the predetermined threshold, the terminal may perform handover again or perform RRE to the existing serving cell.

In step S707, the terminal identifies an available connection. Specifically, when the terminal is located near a coverage boundary of a serving cell, signal quality may be decreased, and even when RRE is performed, there is a high probability that handover is to be performed within a short period of time due to the mobility of the serving cell that is a non-fixed non-terrestrial cell. This may be a factor that decreases network performance. Accordingly, the terminal identifies the available connection time as a cell reselection condition to consider a relative position to the serving cell.

As an example, when the available connection time between the serving cell and the terminal is less than a predetermined threshold, the terminal performs terrestrial cell reselection after transitioning to RRC IDLE. Meanwhile, when the available connection time between the serving cell and the terminal is greater than or equal to the predetermined threshold, the terminal may perform handover again or perform RRE with the serving cell.

Meanwhile, when the serving cell is a non-terrestrial cell and RLF occurs at an edge of the non-terrestrial cell, even if the terminal performs RRE to the non-terrestrial cell, there is a high probability of performing handover again within a short time due to the mobility of the non-terrestrial cell, and the RRE is also highly likely to fail. That is, the above-described steps S703 to S707 may be understood as a process in which the terminal does not immediately perform RRE to the serving cell but considers cell reselection by examining cell reselection conditions to increase a probability of RRE success and minimize communication disconnection and resource waste.

In step S709, the terminal performs cell reselection or RRE based on whether a cell reselection condition is satisfied. As an example, the terminal performs terrestrial cell reselection when all the cell reselection conditions are satisfied in steps S703 to S707. Also, as an example, when at least one of the cell reselection conditions is satisfied, the terminal may reselect a terrestrial cell. The order and identification items of the cell reselection conditions may be changed according to user settings or system settings. For example, the terminal may identify only the priority of a cell, and when a terrestrial cell has priority, transition to an RRC IDLE state and reselect the terrestrial cell.

In addition, some of the cell reselection conditions may be omitted. That is, when at least one of the cell reselection conditions is not satisfied in steps S703 to S707, the terminal may perform RRE with a serving cell or perform handover to a target cell. In addition, as an example, when all the cell reselection conditions are not satisfied, the terminal may perform RRE with the serving cell or perform handover to the target cell.

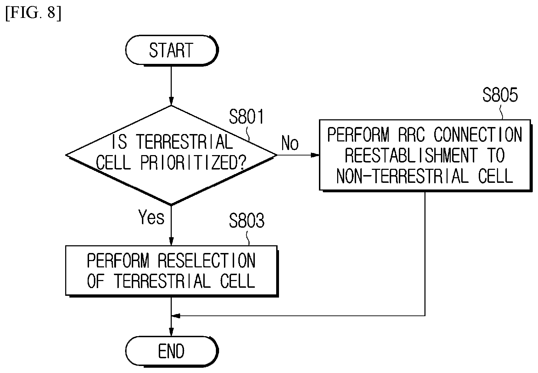

FIG. 8 illustrates an example of a procedure of identifying a priority of a cell for determining a cell reselection condition according to an embodiment of the present disclosure.

Referring to FIG. 8, in step S801, a terminal whether a terrestrial cell is prioritized. Specifically, upon detecting the RLF, the terminal identifies the priority of an RRC cell as a cell reselection condition without immediately performing RRE. As an example, the terminal may examine the priority of a target candidate terrestrial cell for performing cell reselection. That is, the terminal may determine whether a terrestrial cell is set as a priority for performing cell reselection.

Since cell reselection is a procedure for a terminal to move to a cell providing a higher-quality signal, the terminal may use frequency priority as cell priority. As an example, the terminal may determine frequency priority using system information transmitted from a base station through broadcasting. That is, the terminal may utilize the received system information upon cell reselection in an RRC IDLE state. As an example, the terminal may identify frequency priority information included in the system information to determine whether a frequency band of a terrestrial cell is determined as a priority.

In addition, the terminal may identify the frequency priority or a cell reselection criterion through an RRC release message. The RRC release message is used for RRC connection release and may be used, for example, when transitioning an RRC connection state of the terminal to the RRC IDLE state. In addition, as the RRC release message includes instructions for RRC reconfiguration for RRE, it may include information on the cell reselection criterion. That is, the terminal may identify the frequency priority information or the cell reselection criterion included in the RRC release message to identify whether the frequency band of the terrestrial cell is determined as a priority or whether the terrestrial cell is determined as a criterion for cell reselection.

In addition, the terminal may reference the cell reselection criteria of another radio access technology (RAT). As an example, the terminal may reference cell reselection criteria applied to another radio access technology (e.g., transition from LTE to 5G).

In step S803, when a terrestrial cell is prioritized, the terminal performs terrestrial cell reselection. As an example, the terminal may determine the priority of the terrestrial cell by identifying system information transmitted through broadcast or dedicated signaling from a base station. For example, information on the priority of the terrestrial cell may be transmitted periodically or aperiodically through the system information (e.g., SIB19) of the base station. In addition, as an example, the terminal may identify the priority of the terrestrial cell by identifying pre-stored system information transmitted from the base station. Specifically, the information on the priority of the terrestrial cell may be indicated by at least one parameter included in the system information. For instance, the terminal may identify the priority of the terrestrial cell by identifying information on the frequency of the terrestrial cell included in the system information. When a frequency band of the terrestrial cell is identified to have a relatively higher priority, the terminal transitions to RRC IDLE and performs terrestrial cell reselection.

In addition, the terminal identifies frequency priority information or a cell reselection criterion included in an RRC release message, and when the frequency band of the terrestrial cell is determined as a priority or the terrestrial cell is determined as a criterion for cell reselection, the terminal transitions to RRC IDLE and performs terrestrial cell reselection.

In addition, the terminal refers to cell reselection criteria of another radio access technology, and when the terrestrial cell is determined as a criterion for cell reselection, the terminal transitions to RRC IDLE and performs terrestrial cell reselection.

In step S805, when the terrestrial cell is not prioritized, the terminal performs RRE to a non-terrestrial cell. Specifically, as a result of identifying the system information, the RRC release message, and the cell reselection criterion of another RAT, when the non-terrestrial cell is prioritized, the terminal may perform RRE with the non-terrestrial cell or perform handover to a target cell.

Meanwhile, the following standards may be considered in relation to an evaluation process for the terminal to perform cell reselection. Absolute priorities of various NR frequencies or inter-RAT frequencies may be provided to the terminal by being inherited from system information, an RRC release message, or another RAT upon inter-RAT cell (re)selection. In the case of system information, NR frequencies or inter-RAT frequencies may be listed without priority (i.e., a cell reselection priority field is not provided for the corresponding frequencies). The cell reselection priority may mean the cell reselection criteria of the present disclosure. When a cellreselectionpriority or nsag-cellreselectionpriority field is provided in dedicated signaling, the terminal should ignore the cellreselectionpriority and nsag-cellreselectionpriority fields provided in the system information. When the terminal is in a normally camped state, supports slice-based cell reselection, and has received network slice and NSAG information to be used for cell reselection from a NAS (Non-Access Stratum), the terminal should derive the cellreselectionpriority in accordance with clause 5.2.4.11.

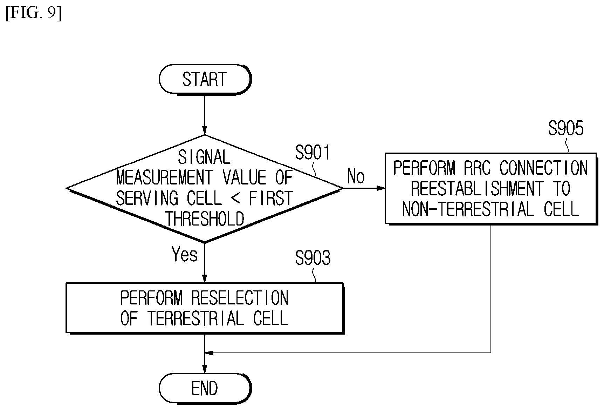

FIG. 9 illustrates an example of a procedure of identifying the strength of a signal to determine a cell reselection condition according to an embodiment of the present disclosure.

Referring to FIG. 9, in step S901, a terminal identifies whether a signal measurement value of a serving cell is less than a first threshold. Specifically, the terminal may determine whether signal measurement values as cell reselection conditions such as the RSRP and RSRQ values of the serving cell are less than the first threshold. Hereinafter, a signal measurement value may be referred to as $M_s$.

More specifically, the terminal may identify whether a result of reflecting a hysteresis value to the signal measurement value is less than the first threshold. The hysteresis value may be pre-set during network design, and the higher the hysteresis value, the more intermittently handover occurs, but latency may increase. Accordingly, the hysteresis value according to the present disclosure may be set to a high value in an environment where signal fluctuations are frequent by analyzing the environment in which a network is operated. In addition, the hysteresis value may be set based on a QoS requirement. As for the first threshold, the higher its value, the more intermittently the handover occurs, and the latency may increase. Therefore, the first threshold according to the present disclosure may be set to a high value in an environment where signal fluctuations are frequent by analyzing the environment in which the network is operated, and may be determined based on the QoS requirement. Meanwhile, hereinafter, the first threshold may be referred to as *Tresh*. Whether the result of reflecting the hysteresis value to the signal measurement value is less than the first threshold may be performed using Equation 1 below. Meanwhile, hereinafter, the hysteresis value may be referred to as *Hys*.

[Equation 1]

$$M_s - Hys < Thresh$$

In step S903, the terminal performs terrestrial cell reselection. Specifically, as a result of the calculation of Equation 1 described above, when a result of reflecting the hysteresis value to the signal measurement value of the serving cell is less than the first threshold, the terminal may determine that a probability of RRE failure is high, transition to an RRC IDLE state, and perform terrestrial cell reselection.

In step S905, the terminal 410 performs RRE to a non-terrestrial cell. Specifically, as a result of the calculation of Equation 1 described above, when the result of reflecting the hysteresis value to the signal measurement value of the serving cell is greater than or equal to the first threshold, the terminal may determine that a probability of RRE success is high, thereby performing RRE.

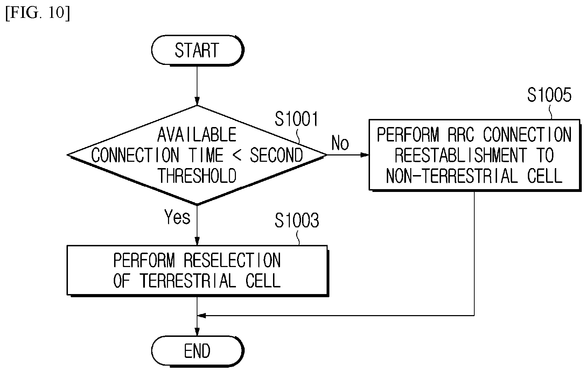

FIG. 10 illustrates an example of a procedure of identifying an available connection time to determine a cell reselection condition according to an embodiment of the present disclosure.

Referring to FIG. 10, in step S1001, a terminal identifies whether an available connection time is less than a second threshold. The available connection time may be a time range in which the terminal can directly communicate with a non-terrestrial cell based on the mobility of the non-terrestrial cell. Specifically, when the terminal is located near a coverage boundary of a serving cell, signal quality may be decreased, and even when RRE is performed, there is a high probability that handover is to be performed within a short period of time due to the mobility of the serving cell that is a non-fixed non-terrestrial cell. This may be a factor that decreases network performance. Accordingly, the terminal identifies the available connection time as a cell reselection condition to consider a relative position to the serving cell. Hereinafter, the available connection time may be referred to as $M_{lt}$.

More specifically, the terminal may determine an available connection time based on information on the available connection time received from a base station. For example, the information on the available connection time may be transmitted periodically or aperiodically through system information (e.g., SIB19) of the base station. Specifically, the information on the available connection time may be indicated by at least one parameter (e.g., t-Service) included in the system information. Here, the at least one parameter may indicate information on a time point at which a service for an area currently covered by the base station is stopped. For example, the at least one parameter may include location information of a non-terrestrial cell, and a velocity of the non-terrestrial cell and may include information on a distance between the terminal and the non-terrestrial cell based on the location information. Meanwhile, the terminal may derive the available connection time based on the received information on the available connection time. In addition, the available connection time may be included in the information on the available connection time received from the base station and then transmitted.

Whether the available connection time derived or received through the above-described process is less than the second threshold may be performed using Equation 2 below. Meanwhile, hereinafter, the second threshold may be referred to as *Tresh*.

[Equation 2]

$$M_{lt} < Thresh$$

In step S1003, the terminal performs terrestrial cell reselection. Specifically, as a result of the calculation of Equation 2 described above, when the available connection time is less than the second threshold, the terminal does not perform RRE but transitions to an RRC IDLE and perform terrestrial cell reselection. That is, when the available connection time is less than a predetermined value, it may be understood as a process in which the terminal determines that handover is to be performed again within a short period of time even if the RRE is performed, and thus RRE is not performed.

Meanwhile, the following standard procedure may be considered in relation to cell reselection. The terminal may use the following rules to limit needed measurements. If a serving cell satisfies conditions of Srxlev > SIntraSearchP and Squal > SIntraSearchQ, or if distanceThresh and referenceLocation are broadcast in SIB19 and the terminal supports location-based measurement initiation for a (quasi-)earth-fixed cell of a non-terrestrial network and has acquired location information, or if a distance between the terminal and a serving cell reference location (referenceLocation) is shorter than distanceThresh, the terminal may not perform intra-frequency measurements. On the other hand, in a case opposite to the above-described situation, the terminal needs to perform intra-frequency measurements.

Also, when distanceThresh and movingReferenceLocation are broadcast in SIB19 and the terminal supports location-based measurement initiation for an earth-moving cell of a non-terrestrial network and has obtained location information, or when a distance between a location of the terminal and a serving cell reference location based on the movingReferenceLocation is shorter than distanceThresh, the terminal may not perform intra-frequency measurements. On the other hand, in a case opposite to the above-described situation, the terminal needs to perform intra-frequency measurements.

The terminal needs to apply the following rules for inter-frequency NR and inter-RAT frequencies indicated in system information, which may correspond to a case where priority is provided as defined in 5.2.4.1.

For an inter-frequency NR or inter-RAT frequency with a reselection priority higher than that of a current NR frequency, the terminal needs to measure the higher priority inter-frequency NR or inter-RAT frequency in accordance with TS 38.133 [8]. In the case of an inter-frequency NR frequency with a reselection priority equal to or lower than that of the current NR frequency and an inter-RAT frequency with a lower priority, for example, when a serving cell satisfies conditions of Srxlev > SnonIntraSearchP and Squal > SnonIntraSearchQ, or when distanceThresh and referenceLocation are broadcast in SIB19 and the terminal supports location-based measurement initiation for a (quasi-)earth-fixed cell of a non-terrestrial network and has acquired location information, or when a distance between the terminal and a serving cell reference location is shorter than distanceThresh, the terminal may not measure the same or lower priority inter-frequency NR cells or lower priority inter-RAT frequency cells. In a case opposite to the above-described situation, the terminal needs to measure the same or lower priority inter-frequency NR cells or lower priority inter-RAT frequency cells in accordance with TS 38.133 [8].

Meanwhile, when distanceThresh and movingReferenceLocation are broadcast in SIB19 and the terminal supports location-based measurement initiation for an earth-moving cell of a non-terrestrial network and has obtained location information, or when a distance between a location of the terminal and a serving cell reference location based on the movingReferenceLocation is shorter than distanceThresh, the terminal may not measure the same or lower priority inter-frequency NR cells or lower priority inter-RAT frequency cells. In a case opposite to the above-described situation, the terminal needs to measure the same or lower priority inter-frequency NR cells or lower priority inter-RAT frequency cells in accordance with TS 38.133 [8]. When the terminal supports relaxed measurement and relaxedMeasurement is present in SIB2, the terminal may further relax required measurements as specified in clause 5.2.4.9.

In case the terminal is camped on a cell of a non-terrestrial network, when the terminal supports TN measurement omission and has acquired location information, and coverageAreaInfoList and tn-AreaIdList are broadcast in system information, the terminal may not measure a TN frequency regardless of priority if it is not within a range of the corresponding frequency provided by the tn-AreaIdList.

When t-Service for a serving cell is present in SIB19 and the terminal supports time-based measurement initiation, the terminal needs to measure intra-frequency, inter-frequency NR, or inter-RAT before t-Service, and this may be applied regardless of a distance between the terminal and a serving cell reference location or whether the serving cell satisfies conditions of Srxlev > SIntraSearchP and Squal > SIntraSearchQ, or Srxlev > SnonIntraSearchP and Squal > SnonIntraSearchQ. The exact time to start measurement before t-Service may depend on terminal implementation. The terminal needs to perform measurement of a higher priority inter-frequency NR or inter-RAT frequency in accordance with TS 38.133 [8] regardless of a remaining service time of the serving cell (i.e., it may be independent of the time remaining until t-Service).

When evaluating the distance between the terminal and the serving cell reference location, obtaining location information by the terminal may depend on terminal implementation. In addition, in the case of an earth-moving cell, maintaining a valid serving cell reference location by the terminal depends on terminal implementation, and this may be derived based on serving satellite orbit information, epochTime, and movingReferenceLocation.

Meanwhile, those of ordinary skill in the technical field to which the present embodiment pertains will be able to understand that various modifications and alterations may be made without departing from the above-described essential features. Therefore, the disclosed methods should be considered in a descriptive rather than a limiting sense. The scope of the present disclosure is defined by the appended claims rather than the foregoing description, and all variations within the equivalent scope thereof shall be construed as being included in the present disclosure.

**Industrial Applicability**

The present invention may be used by a device for performing a handover in a wireless communication system.

**Claims**

1. A method for operating a terminal in a wireless communication system, the method comprising:

   receiving measurement control;
   measuring a signal to transmit a measurement report message to a serving cell; and
   performing cell reselection to a terrestrial cell other than the serving cell upon detecting radio link failure, when the serving cell is a non-terrestrial network (NTN) cell and a condition for omitting radio resource control (RRC) connection re-establishment (RRE) is satisfied.

2. The method of claim 1, wherein the radio link failure is determined based on at least one of expiration of a radio problem timer after radio problem detection, failure of a RACH procedure, occurrence of radio link control (RLC) failure, and detection of uplink listen-before-talk (LBT) failure.

3. The method of claim 1, wherein the condition includes at least one of a priority of a terrestrial cell being higher than a priority of the non-terrestrial cell, strength of a signal of the non-terrestrial cell being less than a threshold, and an available connection time to the non-terrestrial cell being less a threshold.

4. The method of claim 1, further comprising performing the cell reselection to the terrestrial cell based on the serving cell being the non-terrestrial cell and the condition being satisfied.

5. The method of claim 4, wherein the performing of the cell reselection to the terrestrial cell comprises:

   identifying whether the terrestrial cell is set to have a higher priority than the non-terrestrial cell; and
   performing the cell reselection to the terrestrial cell based on the terrestrial cell being set to have the higher priority.

6. The method of claim 4, wherein the performing of the cell reselection to the terrestrial cell comprises:

   comparing a signal measurement value of the non-terrestrial cell with a first threshold;
   performing the cell reselection to the terrestrial cell based on the signal measurement value being less than the first threshold.

7. The method of claim 6, wherein the identifying of whether the signal measurement value is less than the first threshold comprises identifying whether a result obtained by reflecting a hysteresis value to the signal measurement value is less than the first threshold.

8. The method of claim 4, wherein the performing of the cell reselection to the terrestrial cell comprises:

   determining the available connection time between the terminal and the non-terrestrial cell based on a moving reference location of the non-terrestrial cell; and
   performing the cell reselection to the terrestrial cell based on the available connection time being less than a second threshold.

9. A terminal in a wireless communication system, the terminal comprising:

   a transceiver; and
   a processor coupled to the transceiver,
   wherein the processor is configured to:
   receive measurement control;
   measure a signal to transmit a measurement report message to a serving cell; and
   perform cell reselection to a terrestrial cell other than the serving cell upon detecting radio link failure, when the serving cell is a non-terrestrial network (NTN) cell and a condition for omitting radio resource control (RRC) connection re-establishment (RRE) is satisfied.

10. The terminal of claim 9, wherein the radio link failure is determined based on at least one of expiration of a radio problem timer after radio problem detection, failure of a RACH procedure, occurrence of radio link control (RLC) failure, and detection of uplink listen-before-talk (LBT) failure.

11. The terminal of claim 9, wherein the condition includes at least one of a priority of a terrestrial cell being higher than a priority of the non-terrestrial cell, strength of a signal of the non-terrestrial cell being less than a threshold, and an available connection time to the non-terrestrial cell being less a threshold.

12. The terminal of claim 9, wherein the processor is further configured to perform the cell reselection to the terrestrial cell based on the serving cell being the non-terrestrial cell and the condition being satisfied.

13. The terminal of claim 12, wherein the processor is further configured to:

   identify whether the terrestrial cell is set to have a higher priority than the non-terrestrial cell in order to perform the cell reselection to the terrestrial cell; and
   perform the cell reselection to the terrestrial cell based on the terrestrial cell being set to have the higher priority.

**14.** The terminal of claim 12, wherein the processor is further configured to:

compare a signal measurement value of the non-terrestrial cell with a first threshold in order to perform the cell reselection to the terrestrial cell; and
perform the cell reselection to the terrestrial cell based on the signal measurement value being less than the first threshold.

**15.** The terminal of claim 14, wherein the processor is further configured to identify whether a result obtained by reflecting a hysteresis value to the signal measurement value is less than the first threshold.

**16.** The terminal of claim 12, wherein the processor is further configured to:

determine the available connection time between the terminal and the non-terrestrial cell based on a moving reference location of the non-terrestrial cell in order to perform the cell reselection to the terrestrial cell; and
perform the cell reselection to the terrestrial cell based on the available connection time being less than a second threshold.

[FIG. 1]

[FIG. 2]

240 AMF/UPF

NG

gNB

230 NTN Gateway

feeder link

220 NTN payload

NR Uu          service link

210

[FIG. 3]

320

COMMUNICATION
UNIT

310

PROCESSOR

330

MEMORY

[FIG. 4]

EP 4 783 725 A1

[FIG. 5]

EP 4 783 725 A1

[FIG. 6]

```
        ┌─────────┐
        │  START  │
        └────┬────┘
             │                          S601
             ▼
  ┌────────────────────────────────┐
  │  DETECT RADIO LINK FAILURE FOR │
  │  TARGET CELL DURING HANDOVER   │
  └────────────────┬───────────────┘
                   │                   S603
                   ▼
  ┌────────────────────────────────┐
  │        DETERMINE CELL          │
  │    RESELECTION CONDITION       │
  └────────────────┬───────────────┘
                   │                   S605
                   ▼
  ┌────────────────────────────────┐
  │ PERFORM CELL RESELECTION WITHOUT│
  │ RRC CONNECTION REESTABLISHMENT  │
  └────────────────┬───────────────┘
                   │
                   ▼
             ┌─────────┐
             │   END   │
             └─────────┘
```

[FIG. 7]

START

S701
MAINTAIN RRC CONNECTED STATE
AND CONNECTION MANAGEMENT STATE

S703
IDENTIFY PRIORITY OF CELL

S705
IDENTIFY STRENGTH OF SIGNAL

S707
IDENTIFY AVAILABLE CONNECTION TIME

S709
PERFORM CELL RESELECTION OR
RRC CONNECTION REESTABLISHMENT
BASED ON WHETHER CELL RESELECTION
CONDITION IS SATISFIED

END

[FIG. 8]

[FIG. 9]

```
                          ┌──────────┐
                          │  START   │
                          └────┬─────┘
                               │
                               ▼
                         ╱──────────╲
                        ╱   SIGNAL    ╲                              S905
                       ╱ MEASUREMENT   ╲   S901      ┌──────────────────────────┐
                      ╱  VALUE OF        ╲    No      │  PERFORM RRC CONNECTION   │
                      ╲ SERVING CELL <   ╱──────────▶ │   REESTABLISHMENT TO      │
                       ╲   FIRST        ╱             │   NON-TERRESTRIAL CELL    │
                        ╲  THRESHOLD   ╱              └─────────────┬────────────┘
                         ╲──────────╱                              │
                               │ Yes                              │
                               ▼        S903                      │
                      ┌──────────────────────┐                    │
                      │  PERFORM RESELECTION  │                    │
                      │  OF TERRESTRIAL CELL  │                    │
                      └──────────┬───────────┘                    │
                                 │◀──────────────────────────────┘
                                 ▼
                          ┌──────────┐
                          │   END    │
                          └──────────┘
```

[FIG. 10]

**TRANSLATION**

### INTERNATIONAL SEARCH REPORT

International application No.

**PCT/KR2024/019109**

| A. | CLASSIFICATION OF SUBJECT MATTER |
|---|---|

**H04W 76/19**(2018.01)i; **H04W 76/18**(2018.01)i; **H04W 48/20**(2009.01)i; **H04W 24/10**(2009.01)i; **H04W 74/0808**(2024.01)i; **H04W 24/08**(2009.01)i; **H04W 84/06**(2009.01)i

According to International Patent Classification (IPC) or to both national classification and IPC

| B. | FIELDS SEARCHED |
|---|---|

Minimum documentation searched (classification system followed by classification symbols)

H04W 76/19(2018.01); H04B 7/185(2006.01); H04W 24/08(2009.01); H04W 36/30(2009.01); H04W 76/15(2018.01); H04W 84/06(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선 통신(wireless communication), 측정 제어(measurement control), 서빙 셀 (serving cell), 측정 보고 메시지(measurement report message), 무선 링크 실패(wireless link failure), 비지상 셀(non-terrestrial networks cell), RRC 연결 재설정(radio resource control connection re-establishment), 셀 재선택(cell reselection)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2023-0060250 A1 (QUALCOMM INCORPORATED) 02 March 2023 (2023-03-02)<br>paragraph [0067]; and claim 24 | 1-16 |
| Y | KR 10-2023-0107103 A (LG ELECTRONICS INC.) 14 July 2023 (2023-07-14)<br>paragraphs [0208], [0211], [0214], [0218]-[0222] | 1-16 |
| Y | 3GPP, TSGRAN; NR; Radio Resource Control (RRC) protocol specification (Release 18). 3GPP TS 38.331 V18.1.0. 01 April 2024.<br>pages 183, 250, 538 | 2,7-8,10,15-16 |
| A | WO 2024-072965 A1 (INTERDIGITAL PATENT HOLDINGS, INC.) 04 April 2024 (2024-04-04)<br>paragraphs [0021]-[0098]; and figures 1A-5 | 1-16 |

☑ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **22 July 2025** | **24 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/019109** |

## C.    DOCUMENTS CONSIDERED TO BE RELEVANT

| Category* | Citation of document, with indication, where appropriate, of the relevant passages | Relevant to claim No. |
| --- | --- | --- |
| A | KR 10-2022-0137420 A (INNOVATIVE TECHNOLOGY LAB CO., LTD.) 12 October 2022 (2022-10-12)<br>    paragraphs [0035]-[0155]; and figure 1 | 1-16 |

Form PCT/ISA/210 (second sheet) (July 2022)

**TRANSLATION**

**INTERNATIONAL SEARCH REPORT**
**Information on patent family members**

International application No.

**PCT/KR2024/019109**

| Patent document cited in search report | | | Publication date (day/month/year) | Patent family member(s) | | | Publication date (day/month/year) |
|---|---|---|---|---|---|---|---|
| US | 2023-0060250 | A1 | 02 March 2023 | CN | 117882489 | A | 12 April 2024 |
| | | | | EP | 4397129 | A1 | 10 July 2024 |
| | | | | US | 12143834 | B2 | 12 November 2024 |
| | | | | US | 12245051 | B2 | 04 March 2025 |
| | | | | US | 12262225 | B2 | 25 March 2025 |
| | | | | US | 2023-0061624 | A1 | 02 March 2023 |
| | | | | US | 2023-0068504 | A1 | 02 March 2023 |
| | | | | WO | 2023-034289 | A1 | 09 March 2023 |
| KR | 10-2023-0107103 | A | 14 July 2023 | CN | 116419281 | A | 11 July 2023 |
| | | | | US | 2023-0224791 | A1 | 13 July 2023 |
| WO | 2024-072965 | A1 | 04 April 2024 | None | | | |
| KR | 10-2022-0137420 | A | 12 October 2022 | WO | 2022-211426 | A1 | 06 October 2022 |

Form PCT/ISA/210 (patent family annex) (July 2022)